# NOUVEAU FASCICULE DE BREVET EUROPEEN

(11) **EP 2 112 406 B2**
(45) Date de publication et mention de la décision concernant l'opposition: **16.03.2016**
(45) Mention de la délivrance du brevet: 28.12.2011
(21) Numéro de dépôt: 09305268.6
(22) Date de dépôt: 30.03.2009
(51) Int. Cl.: F16H 59/04, F16H 59/10, G01D 5/14

(54) **Dispositif de détection de la position d'un levier de commande de boîte de vitesses d'un véhicule automobile**
Vorrichtung zur Positionserkennung eines Steuerhebels des Getriebes eines Kraftfahrzeugs
Device for detecting the position of an automobile gearbox control stick

(30) Priorité: 21.04.2008 FR 0852667
(43) Date de publication de la demande: 28.10.2009
(73) Titulaire: Dura Automotive Systems SAS, 91570 Bièvres (FR)
(72) Inventeur: Derouet, Hugues, 75020 Paris (FR)
(74) Mandataire: Cabinet Laurent & Charras

(56) Documents cités:
- EP-A- 1 882 871
- DE-A1- 10 143 437
- DE-A1-102004 056 800
- DE-A1-102004 056 800
- DE-A1-102006 044 404
- DE-A1-102007 026 303
- MELEXIS: "MLX90333 Triaxis 3D-Joystick Position Sensor" INTERNET ARTICLE, [Online] janvier 2008 (2008-01), pages 1-43, XP002501616 Extrait de l'Internet: URL:http://www.melexis.com/Sensor_ICs_Hall _effect/Triaxis_Hall_ICs/TriaxisTM_3D-Joys tick_Position_Sensor_648.aspx> [extrait le 2008-10-28]
- Melexis "Melexis Triaxis TM Technology Adds The 3rd Dimension To Conventional Hall Effect Sensing MLX90333", Vincent Hiligsmann, Marketing & Applications, Melexis N.V., Ypres, Belgique, diapositives 1-27 d'une présentation publique donnée le 23 mai 2007 de 12h à 12h30 dans le cadre du salon "Sensor + Test 2007, Die Messtechnik-Messe, The Measurement Fair" à Nüremberg, Allemagne
- Programme des conférences tenues du 22 au 24 mai 2007 dans le cadre du salon "Sensor + Test 2007, Die Messtechnik-Messe, The Measurement Fair"
- Message électronique échangé entre Laura Demedde, AMA Service GmbH, et Dr. Müller
- Melexis: "MLX90333 Triaxis 3D-Joystick Position Sensor", fiche technique, janvier 2008, pages 1-43, 3901090333 Rev. 001 ¬fourni par Vincent Hiligsmann|
- Melexis: "MLX90333 Triaxis 3D-Joystick Position Sensor", fiche technique, janvier 2008, pages 1-43, 3901090333 Rev. 001 ¬extrait de l'Internet le 28.09.2012|

## Description

L'invention se rattache au secteur technique des boîtes de vitesses de véhicules automobiles.

Plus particulièrement, l'invention concerne un dispositif de détection de la position d'un levier de commande.

D'une manière parfaitement connue, le levier est monté avec capacité de déplacement angulaire dans un boîtier support fixé généralement au niveau de l'habitacle du véhicule. Le levier est agencé pour assurer la commande de sélection et de passage des vitesses, soit dans le cadre d'une boîte de vitesses dite « automatique » ou dans le cadre d'une boîte de vitesses dite « mécanique ».

Il est apparu important de pouvoir détecter la position du levier afin de connaître les déplacements du levier et sa position précise dans l'espace. Par exemple, selon l'état antérieur de la technique, le levier peut être assujetti à des capteurs de position, par exemple du type sans contact et dont les signaux de sortie sont transmis à des moyens de traitement. Pour déterminer les différents sens de déplacement et la position du levier, avec précision, il est généralement nécessaire d'employer un nombre assez significatif de capteurs, ce qui peut générer des difficultés de montage et de câblage, avec des risques de fiabilité.

Pour tenter de remédier à ces inconvénients, une solution ressort de l'enseignement du brevet EP 1.772.649 qui décrit un levier de commande de boîte de vitesses qui comprend deux capteurs sans contact disposés selon un axe de rotation que présente le levier. Ces deux capteurs fournissent des informations nécessaires pour déterminer la position du levier et le sens de déplacement de ce dernier. Les deux capteurs utilisés sont des capteurs à magnétorésistance.

A partir de cet état de la technique, le problème que se propose de résoudre l'invention est encore de simplifier le montage et le câblage selon une solution technique permettant de donner des informations précises sur les différentes positions et les sens de déplacement du levier de commande.

Pour résoudre un tel problème, il a été conçu et mis au point un dispositif de détection de la position d'un levier de commande de boîte de vitesses d'un véhicule automobile monté avec capacité de déplacement dans un boîtier support à l'encontre de moyens aptes à détecter lesdits déplacements et à envoyer des signaux électriques dans une unité de traitement. Selon l'invention, les moyens sont constitués par un seul capteur à effet hall monté en regard d'un aimant et apte à indiquer les différents déplacements et positionnements du levier selon les trois axes X - Y - Z.

Pour résoudre le problème posé de faciliter la connexion électrique notamment, le capteur à effet hall est monté sur une partie fixe du boîtier support, tandis que l'aimant est monté sur une partie du levier.

Selon l'invention, l'aimant est monté dans un agencement que présente une rotule d'articulation solidaire du levier. L'aimant est disposé à l'intérieur des limites du faisceau de vision du capteur.

L'invention est exposée ci-après plus en détail à l'aide des figures des dessins annexés dans lesquels :
- la figure 1 est une vue en perspective, à caractère schématique, montrant le montage, avec capacité d'articulation, au moyen d'une rotule, d'un levier de commande dans un boîtier support ;
- la figure 2 montre, par une vue en perspective, à caractère schématique, l'unique capteur utilisé selon l'invention pour la détection des positions et des sens de déplacement du levier de commande ;
- la figure 3 est une vue en coupe, à caractère purement schématique, montrant le montage de l'aimant sur le levier et son positionnement par rapport au capteur monté sur une partie fixe.

D'une manière parfaitement connue pour un homme du métier, le levier de commande (1) de la boîte de vitesses mécanique ou automatique, est monté avec capacité de déplacement angulaire dans un boîtier support (2). Le montage avec capacité de déplacement angulaire du levier (1) s'effectue au moyen d'une rotule (3). En outre, le levier (1) est agencé pour être accouplé, d'une manière mécanique ou électrique, avec tous types d'actionneurs pour la commande de la sélection et du passage des vitesses.

Comme indiqué, le levier (1) est monté avec capacité de déplacement dans le boîtier support (2) à l'encontre de moyens aptes à détecter ses différentes positions et ses différents déplacements, et envoyer des signaux électriques dans une unité de traitement.

Selon une caractéristique à la base de l'invention, les moyens de détection sont constitués par un seul capteur à effet hall (4) monté en regard d'un aimant permanent (5).

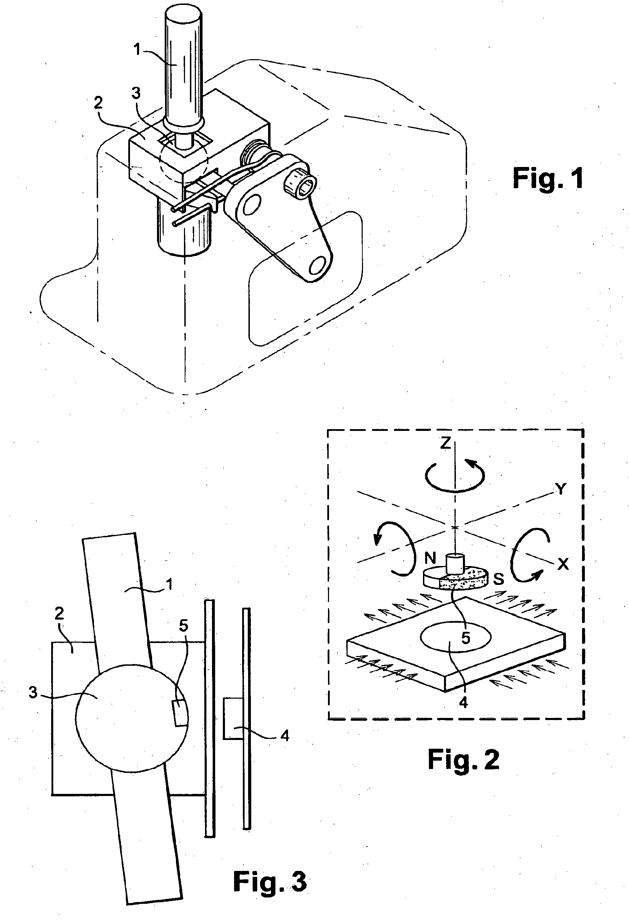

Comme le montre la figure 2, le capteur à effet hall (4) est apte à indiquer les différents déplacements et positionnements du levier (1) selon les trois axes (X - Y - Z).

Plus particulièrement, le capteur (4) est conformé pour mesurer les composants d'un champ magnétique en X et en Y et, à partir de ces informations, en déduire la position de l'aimant et, par conséquent, celle du levier. Ce capteur (4) est conforme à celui connu sous la marque « TRIAXIS ».

L'aimant permanent (5) est disposé sur une partie du levier (1) en regard du capteur (4) monté sur une partie fixe du boîtier (2) notamment.

Sans pour cela sortir du cadre de l'invention, on n'exclut pas un montage inverse. Toutefois, pour des raisons de montage et de liaison électrique, il est préférable de monter le capteur (4) sur une partie fixe.

L'aimant (5) est fixé dans un agencement que présente la rotule (3) d'articulation du levier (1). Cet agencement est déterminé pour que l'aimant (5) soit disposé à l'intérieur des limites du faisceau de vision du capteur (4).

Compte tenu de ces dispositions, il apparaît donc que le capteur (4) va mesurer le déplacement de l'aimant qui correspondra au déplacement du levier indiquant, par conséquent, les différentes positions dudit levier, ainsi que ses différents sens de déplacement. On rappelle que le capteur (4) est sélectionné pour mesurer les composants d'un champ magnétique en X et en Y, afin d'en déduire une position. Il est par conséquent possible, au niveau de l'unité de traitement, d'utiliser une carte universelle.

Compte tenu des caractéristiques fonctionnelles du capteur (4), on peut en déduire un mouvement, de sorte qu'il est possible d'anticiper un changement de rapport de vitesses. Lorsqu'on commence à agir sur le levier, il est possible de déterminer si le conducteur souhaite monter ou descendre un rapport de vitesses.

Comme indiqué, le capteur (4) est assujetti à une unité de traitement de signal correspondant à un couple X, Y de coordonnées. En fonction de ce couple, on peut avoir, pour chaque type de levier, un tableau permettant de faire la correspondance entre les X et les Y, et la position demandée.

A partir de ce tableau, un logiciel spécifique peut traiter une information permettant, par conséquent, de connaître la position du levier.

Il en résulte qu'à une position du levier (1) sur la grille correspond une position physique de l'aimant (5) sur la rotule (3) et à une position du champs magnétique dans l'angle solide de vision de la sonde (capteur 4).

Il y a donc deux moyens de traitement du signal. Le premier moyen de traitement du signal est dans la sonde (4). Dans ce cas, le capteur renvoie un signal proportionnel à une position physique (position dans l'angle solide de vision). Le deuxième traitement du signal associe la position physique à une position pratique (position dans une grille, exemple : PNRD/ R-1-2-3-4-5-6 ...). Il peut être dans un autre module ou dans le capteur. Dans ce dernier cas, le capteur (4) renvoie un signal codé qui correspond à une position pratique.

A partir du concept à la base de l'invention, d'utiliser un seul ensemble constitué d'un seul aimant et d'un seul capteur à effet hall avec, par conséquent, un faible encombrement en résultant, il est possible de monter en parallèle plusieurs ensembles identiques, toujours composés d'un seul capteur et d'un seul aimant, de sorte que si l'un tombe en panne, il est toujours possible d'avoir l'information recherchée.

Les avantages ressortent bien de la description, en particulier on souligne et on rappelle :
- la simplicité et la robustesse du dispositif de détection et le faible encombrement ;
- la possibilité d'anticiper un changement de rapport afin d'adapter le régime moteur ;
- la possibilité de détecter un départ ou un arrêt par rapport au point mort ;
- la fiabilité de fonctionnement compte tenu du nombre de composants réduits ;
- la simplicité de montage et de câblage ;
- la possibilité d'utiliser une carte universelle de traitement.

## Revendications

1. Dispositif de détection de la position d'un levier de commande (1) de boîte de vitesses d'un véhicule automobile, ledit levier étant solidaire d'une rotule (3) pour être monté avec capacité de déplacement dans un boîtier support (2) à l'encontre de moyens aptes à détecter lesdits déplacements et à envoyer des signaux électriques dans une unité de traitement,
**caractérisé en ce que** les moyens sont constitués par un seul capteur à effet hall (4) monté sur une partie fixe du boîtier support (2) en regard d'un aimant (5) monté sur la rotule (3), de sorte que les signaux électriques envoyés dans l'unité de traitement correspondent à un couple X - Y de coordonnées de l'aimant (5), ledit couple étant déterminé à partir des composants en X et en Y d'un champ magnétique mesurés par le capteur à effet hall (4), permettant l'obtention d'un tableau de correspondance entre les X et les Y et la position du levier, les différents déplacements et positionnements du levier selon trois axes perpendiculaires les uns aux autres X - Y - Z étant déterminés par l'intermédiaire d'un logiciel qui traite, à partir du tableau de correspondance, une information pour connaître la position du levier.

2. Dispositif selon la revendication 1, **caractérisé en ce que** l'aimant (5) est disposé à l'intérieur des limites du faisceau de vision du capteur (4).

## Patentansprüche

1. Vorrichtung zur Positionserkennung eines Schalthebels (1) eines Kraftfahrzeuggetriebes, wobei der Hebel für einen bewegungsfähigen Einbau in ein Trägergehäuse (2) fest mit einem Kugelgelenk (3) verbunden ist und Mittel vorhanden sind, die diese Bewegungen erkennen und elektrische Signale an eine Verarbeitungseinheit senden können,
**dadurch gekennzeichnet, dass** die Mittel einen einzigen Halleffekt Sensor (4) umfassen, der auf einem ortsfesten Teil des Trägergehäuses (2) gegenüber eines auf dem Kugelgelenk montierten Magneten (5) angeordnet ist, so dass die elektrischen Signale, die an die Verarbeitungseinheit gesendet werden, einem X-Y-Koordinatenpaar des Magneten (5) entsprechen, wobei das Koordinatenpaar durch die X- und Y-Komponenten eines vom Halleffekt Sensor (4) gemessenen Magnetfelds bestimmt werden, wodurch die Erstellung einer Entsprechungstabelle zwischen den X- und Y-Werten und der Hebelposition ermöglicht wird, wobei die verschiedenen Bewegungen und Positionierungen des Hebels gemäß drei senkrecht zueinander stehenden Achsen in X - Y - Z über eine Software bestimmt werden, die zur Bestimmung der Hebelposition einen Datensatz über die Entsprechungstabelle verarbeitet.

2. Vorrichtung nach Anspruch 1, **dadurch gekennzeichnet, dass** der Magnet (5) innerhalb der Sichtfeldgrenzen des Sensors (4) angeordnet ist.

## Claims

1. Device for detecting the position of a gearbox gearshift lever (1) of a motor vehicle, said lever being integral with a ball (3) to be mounted movable in a support housing (2) against means able to detect movements and to send electrical signals to a processing unit,
**characterized in that** the means are formed by a single Hall-effect sensor (4) mounted on a fixed part of the support housing (2) facing to a magnet (5) mounted on the ball (3), so that the electrical signals sent to the processing unit correspond to a pair X - Y of coordinates of the magnet (5), said pair being determined from the components in X and Y of a magnetic field measured by the Hall-effect sensor (4), allowing to obtain a correlation table between the X and Y and the lever position, the various displacements and positions of the lever along three axes perpendicular to each other X - Y - Z being determined through a software that, from the correlation table, processes information to know the lever position.

2. Device according to claim 1, **characterized in that** the magnet (5) is disposed within the bounds of the vision beam of the sensor (4).
